# EUROPÄISCHE PATENTSCHRIFT

(11) **EP 3 945 643 B1**
(45) Veröffentlichungstag und Bekanntmachung des Hinweises auf die Patenterteilung: **10.07.2024**
(21) Anmeldenummer: 21187843.4
(22) Anmeldetag: 27.07.2021
(51) Int. Cl.: H01R 13/453

(54) **ELEKTRISCHE KUPPLUNG, DIE MIT EINER WEITEREN ELEKTRISCHEN KUPPLUNG KOPPELBAR IST, SOWIE KUPPLUNGSSYSTEM UMFASSEND DERARTIGE ELEKTRISCHE KUPPLUNGEN**
ELECTRICAL COUPLING WHICH CAN BE COUPLED TO A FURTHER ELECTRICAL COUPLING, AND COUPLING SYSTEM COMPRISING SUCH ELECTRICAL COUPLINGS
COUPLEUR ÉLECTRIQUE POUVANT ÊTRE COUPLÉ À UN AUTRE COUPLEUR ÉLECTRIQUE, AINSI QUE SYSTÈME DE COUPLAGE COMPRENANT DE TELS COUPLEURS ÉLECTRIQUES

(30) Priorität: 28.07.2020 DE 102020119852
(43) Veröffentlichungstag der Anmeldung: 02.02.2022
(73) Patentinhaber: ABL SURSUM BAYERISCHE ELEKTROZUBEHÖR GmbH & Co. KG, 91207 Lauf (DE)
(72) Erfinder: Poppendörfer, Thomas, 91247 Vorra-Artelshofen (DE); Hanauer, Petra, 91220 Schnaittach (DE)
(74) Vertreter: Schlögl, Markus

(56) Entgegenhaltungen:
- EP-A1- 2 685 568
- US-B1- 10 266 059

## Beschreibung

Die Erfindung betrifft eine elektrische Kupplung, insbesondere eine elektrische Steckdose, die mit einer weiteren elektrischen Kupplung, insbesondere einem elektrischen Stecker, koppelbar ist, wobei die elektrische Kupplung zu der weiteren elektrischen Kupplung zumindest bereichsweise komplementär ausgebildet ist. Außerdem betrifft die Erfindung eine weitere elektrische Kupplung, insbesondere einen elektrischen Stecker, die zumindest bereichsweise komplementär zu der vorgenannten elektrischen Kupplung ausgebildet ist. Ferner betrifft die Erfindung ein Kupplungssystem umfassend eine derartige elektrische Kupplung und eine derartige weitere elektrische Kupplung.

Unter einer elektrischen Kupplung wird im Rahmen dieser Beschreibung eine am Ende eines Kabels angebrachte elektrische Kupplung verstanden, die insbesondere als elektrische Steckdose und/oder elektrischer Stecker ausgebildet ist. Die elektrische Kupplung kann frei beweglich oder ortsfest installiert sein. Beispielsweise ist die elektrische Steckdose stationär installiert, während der elektrische Stecker frei beweglich ist. Insbesondere weist die elektrische Steckdose Kontaktbuchsen auf, die zum Aufnehmen von elektrischen Kontaktstiften des elektrischen Steckers vorgesehen sind. Innerhalb der Kontaktbuchsen sind elektrische Kontaktelemente angeordnet, die mit den elektrischen Kontaktstiften kontaktierbar sind.

Wenn sich kein Stecker in der Steckdose befindet, dürfen die elektrischen Kontaktelemente der Steckdose, an denen hohe elektrischen Spannungen anliegen, aus Sicherheitsgründen nicht von außen zugänglich sein. Außerdem sollen die elektrischen Kontaktelemente der Steckdose vor Fremdpartikeln und Spritzwasser geschützt werden, um Funktionsstörungen zu vermeiden. Es sind elektrische Steckdosen mit Abdeckelementen für die elektrischen Kontaktelemente bekannt, bei denen die Abdeckelemente senkrecht zur Einführrichtung der elektrischen Kontaktstifte bewegbarbar sind.

Beispielsweise sind die Abdeckelemente mit einer schrägen Rampe ausgebildet. Der elektrische Kontaktstift drückt beim Einführen gegen diese Rampe und bewegt das Abdeckelement senkrecht zur Einführrichtung, so dass die Kontaktbuchse geöffnet und die elektrischen Kontaktelemente freigelegt werden. Die Reibung ist jedoch groß, so dass die Funktion nicht zuverlässig gewährleistet werden kann und/oder das Einführen des Steckers für den Benutzer schwierig ist.

Weiterhin gibt es elektrische Steckdosen, die zum Bewegen der Abdeckelemente einen Mechanismus mit mehreren Elementen aufweisen. Dieser Mechanismus ist jedoch meist sehr komplex ausgebildet, so dass ein relativ großes Gehäuse für die Steckdose benötigt wird.

Aus EP 2 685 568 A1 und aus US 10 266 059 B1 bekannte elektrische Steckdosen weisen Kontaktbuchsen zum Einführen elektrischer Kontaktstifte auf, wobei in den Kontaktbuchsen elektrische Kontaktelemente angeordnet und mit den elektrischen Kontaktstiften elektrisch verbindbar sind. Ferner weisen diese Steckdosen Abdeckelemente zum Schließen der Kontaktbuchsen und Abdecken der elektrischen Kontaktelemente auf, wobei die Abdeckelemente zwischen einem geschlossenen und geöffneten Zustand senkrecht zur Einführrichtung der elektrischen Kontaktstifte bewegbar sind.

Es ist Aufgabe der Erfindung, eine elektrische Kupplung, insbesondere eine elektrische Steckdose, bereit zu stellen, die mit geringem Aufwand und Platzbedarf die Abschirmung der elektrischen Kontaktelemente ermöglicht. Ferner soll ein Kupplungssystem umfassend diese elektrische Kupplung und eine weitere elektrische Kupplung, insbesondere einen elektrischen Stecker, die zumindest bereichsweise komplementär zu der vorgenannten elektrischen Kupplung ausgebildet ist, angegeben werden.

Diese Aufgabe wird hinsichtlich der elektrische Kupplung durch die Merkmale der elektrischen Kupplung nach Anspruch 1 und hinsichtlich des Kupplungssystems durch die Merkmale nach Anspruch 14 gelöst. Vorteilhafte Weiterbildungen sind in den jeweils abhängigen Ansprüchen angegeben.

Gemäß der Erfindung ist eine elektrische Kupplung, insbesondere elektrische Steckdose, vorgesehen, die mit einer weiteren elektrischen Kupplung, insbesondere einem elektrischen Stecker, koppelbar ist, wobei die elektrische Kupplung zu der weiteren elektrischen Kupplung zumindest bereichsweise komplementär ausgebildet ist, und wobei die elektrische Kupplung Folgendes aufweist:
- wenigstens eine Kontaktbuchse zum Einführen eines elektrischen Kontaktstiftes der weiteren elektrischen Kupplung,
- wenigstens ein elektrisches Kontaktelement, das in der Kontaktbuchse angeordnet und mit dem elektrischen Kontaktstift elektrisch verbindbar ist,
- wenigstens ein Abdeckelement zum Schließen der Kontaktbuchse und/oder Abdecken des elektrischen Kontaktelements, wobei das Abdeckelement zwischen einem geschlossenen und geöffneten Zustand senkrecht zur Einführrichtung des elektrischen Kontaktstiftes bewegbar ist,
- wenigstens ein Steuerelement, das durch die weitere elektrische Kupplung im Wesentlichen parallel zur Einführrichtung des elektrischen Kontaktstiftes bewegbar ist,
- wenigstens ein Federelement, durch das das Steuerelement entgegen der Einführrichtung des elektrischen Kontaktstiftes bewegbar ist, und
- eine Zwangskopplung zwischen dem Steuerelement und dem Abdeckelement, so dass das Abdeckelement nach außen verschiebbar ist, während die weitere elektrische Kupplung an die elektrische Kupplung gekoppelt wird.

Der Kern der Erfindung liegt darin, dass das Steuerelement im Wesentlichen parallel zur Einführrichtung des elektrischen Kontaktstiftes bewegbar ist, wenn die weitere elektrische Kupplung angekoppelt wird. Das Federelement wirkt auf das Steuerelement entgegen der Einführrichtung des elektrischen Kontaktstiftes. Da sich das Steuerelement und die weitere elektrische Kupplung in die gleiche Richtung bewegen, ist eine zuverlässige Funktion gewährleistet. Da der Reibungswiderstand gering ist, kann der Benutzer den elektrischen Stecker ohne Schwierigkeiten einführen. Das Steuerelement und das Federelement können entlang einer Linie angeordnet sein, so dass eine kompakte Bauweise für die elektrische Kupplung möglich ist. Das Zwischenschalten der Zwangskopplung zwischen dem Steuerelement und dem Abdeckelement trägt ebenfalls zur zuverlässigen Funktionsweise und zum geringen Reibungswiderstand bei.

Insbesondere ist vorgesehen, dass das Federelement eine Druckfeder ist, die vorzugsweise zwischen dem Steuerelement und einem Gehäuse der elektrischen Kupplung angeordnet ist. Dies trägt zu einem geringen Platzbedarf für die elektrische Kupplung bei.

Weiterhin umfasst die elektrische Kupplung wenigstens ein Hebelelement, das mit dem Abdeckelement und einem oder dem Gehäuse der elektrischen Kupplung verbunden und mittels des Steuerelements schwenkbar ist. Das Hebelelement ist somit an dem Gehäuse der elektrischen Kupplung schwenkbar angebracht.

Beispielsweise ist das Hebelelement über ein erstes Gelenk mit dem Abdeckelement und über ein zweites Gelenk mit dem Gehäuse der elektrischen Kupplung verbunden, wobei vorzugsweise das erste und/oder zweite Gelenk als Scharniergelenk ausgebildet sind. Somit ist das Abdeckelement über ein Doppelgelenk mit dem Gehäuse der elektrischen Kupplung verbunden. Dies trägt zum geringen Platzbedarf für die elektrische Kupplung bei.

Bei der bevorzugten Ausführungsform weist das Hebelelement wenigstens eine Kulissenführung und das Steuerelement wenigstens einen Kulissenzapfen auf, wobei der Kulissenzapfen in die Kulissenführung eindringt und entlang der Kulissenführung verschiebbar ist. Vorzugsweise ist die Kulissenführung zwischen dem ersten Gelenk und zweiten Gelenk angeordnet. Die Kulissenführung und der Kulissenzapfen tragen zu einem geringen Reibungswiderstand zwischen dem Steuerelement und dem Abdeckelement bei.

Insbesondere ist die Kulissenführung S-förmig ausgebildet, so dass durch die Bewegung des Steuerelements entlang der Einführrichtung des elektrischen Kontaktstiftes das Hebelelement nach außen geschwenkt, das Abdeckelement nach außen verschoben und die Kontaktbuchse geöffnet wird.

Bei der bevorzugten Ausführungsform sind einem Steuerelement zwei Hebelelemente und zwei Abdeckelemente zugeordnet, wobei vorzugsweise das Steuerelement zwischen den Hebelelementen angeordnet ist. Dadurch sind der konstruktive Aufwand und der Platzbedarf gering. Bei einer alternativen Ausführungsform kann das Steuerelement einem Hebelelement und einem Abdeckelement zugeordnet sein, wobei das Steuerelement neben dem Hebelelement angeordnet ist. Wenn die räumlichen Verhältnisse es zulassen, kann im letztgenannten Fall das Steuerelement auch außerhalb des Hebelelements angeordnet sein. Bei einer weiteren Ausführungsform können zwei Steuerelemente einem Hebelelement und einem Abdeckelement zugeordnet sein, wobei das Hebelelement und das Abdeckelement zwischen den beiden Steuerelementen angeordnet sind.

Vorzugsweise umfasst die Kontaktbuchse eine seitliche Öffnung, insbesondere einen Schlitz, durch die das Abdeckelement zum Abdecken des elektrischen Kontaktelements in die Kontaktbuchse eindringbar ist oder eindringt. Die Öffnung, insbesondere der Schlitz, dient auch als Führung für das Abdeckelement.

Außerdem kann die elektrische Kupplung wenigstens eine weitere Kontaktbuchse ohne Abdeckelemente aufweisen. Diese Kontaktbuchse ist permanent offen und weist insbesondere elektrische Kontaktelemente für niedrige Spannungen auf.

In einer Ausgestaltung weist das Steuerelement wenigstens eine Führungsnase und die Kupplung wenigstens eine mit der Führungsnase korrespondierende Führungsschiene auf, wobei die Führungsnase im geschlossenen Zustand des Abdeckelements seitlich vor einer Stirnseite der Führungsschiene angeordnet ist. Die Führungsnase ist bei der Bewegung des Steuerelements parallel zur Einführrichtung des elektrischen Kontaktstiftes entlang einer Längsseite der Führungsschiene bewegbar, wobei sich das Abdeckelement bei dieser Bewegung in den geöffneten Zustand bewegt. Bei einer von der vorgesehenen Parallelbewegung über ein vorgegebenes Spiel hinausgehenden Abweichung schlägt die Führungsnase hingegen an der Stirnseite der Führungsschiene an, wodurch eine weitere Bewegung des Steuerelements und damit eine Bewegung des Abdeckelements in den geöffneten Zustand verhindert wird. Führt das Steuerelement beim Betätigen eine Schwenkbewegung aus, also eine Abweichung von der Parallelbewegung über ein vorgegebenes, erlaubtes Spiel hinaus, so verhindert das Zusammenwirken von Führungsnase und Führungsschiene eine weitere Bewegung des Steuerelements und damit das Öffnen des oder der Abdeckelemente. Eine solche Schwenkbewegung kann beispielsweise beim unerwünschten schrägen Einschieben der weiteren Kupplung oder beim, beispielsweise nur einseitigen, Betätigen des Steuerelements durch ein Werkzeug, beispielsweise einen Schraubendreher oder einen Nagel, oder durch den Finger eines Benutzers auftreten. In diesen Situationen soll ein Öffnen der Abdeckelemente verhindert werden, da andernfalls spannungsführende Kontakte frei zugänglich sein könnten.

Schließlich ist der elektrischen Kupplung die weitere, zumindest bereichsweise komplementär ausgebildete, elektrische Kupplung zugeordnet, die wenigstens ein Antriebselement aufweist, das zum Bewegen des Steuerelements während der Kopplung der weiteren elektrischen Kupplung an die elektrische Kupplung vorgesehen ist. Das Antriebselement ist so ausgebildet, dass das Steuerelement während des Einführens der weiteren elektrischen Kupplung in die elektrische Kupplung geschoben wird.

Ferner betrifft die Erfindung ein Kupplungssystem umfassend eine erfindungsgemäße elektrische Kupplung und eine weitere elektrische Kupplung, insbesondere einen elektrischen Stecker. Die weitere elektrische Kupplung ist zumindest bereichsweise komplementär zu der elektrischen Kupplung ausgebildet und weist wenigstens ein Antriebselement auf, das zum Bewegen des Steuerelements der elektrischen Kupplung während der Kopplung der weiteren elektrischen Kupplung an die elektrische Kupplung vorgesehen ist. Beispielsweise umfasst die weitere elektrische Kupplung eine Hülse, deren Stirnseite als Antriebselement vorgesehen ist und beim Einführen direkt auf das Steuerelement der elektrischen Kupplung wirkt.

Die Erfindung wird nachstehend auch hinsichtlich weiterer Merkmale und Vorteile anhand der Beschreibung einer bevorzugten Ausführungsform und unter Bezugnahme auf die beigefügten Zeichnungen näher erläutert.

Es zeigen
- FIG 1: eine Perspektivansicht einer elektrischen Steckdose gemäß einer bevorzugten Ausführungsform der Erfindung,
- FIG 2: eine Perspektivansicht der elektrischen Steckdose mit einem elektrischen Stecker gemäß der bevorzugten Ausführungsform der Erfindung,
- FIG 3: eine Vorderansicht der elektrischen Steckdose in einem geschlossenen Zustand gemäß der bevorzugten Ausführungsform der Erfindung,
- FIG 4: eine Perspektivansicht der elektrischen Steckdose in dem geschlossenen Zustand gemäß der bevorzugten Ausführungsform der Erfindung,
- FIG 5: eine Vorderansicht der elektrischen Steckdose in einem geöffneten Zustand gemäß der bevorzugten Ausführungsform der Erfindung,
- FIG 6: eine Perspektivansicht der elektrischen Steckdose in dem geöffneten Zustand gemäß der bevorzugten Ausführungsform der Erfindung,
- FIG 7: eine Schnittansicht der elektrischen Steckdose in dem geschlossenen Zustand gemäß der bevorzugten Ausführungsform der Erfindung,
- FIG 8: eine perspektivische Schnittansicht der elektrischen Steckdose in dem geschlossenen Zustand gemäß der bevorzugten Ausführungsform der Erfindung,
- FIG 9: eine Schnittansicht der elektrischen Steckdose in dem geöffneten Zustand gemäß der bevorzugten Ausführungsform der Erfindung,
- FIG 10: eine perspektivische Schnittansicht der elektrischen Steckdose in dem geöffneten Zustand gemäß der bevorzugten Ausführungsform der Erfindung,
- FIG 11: eine Perspektivansicht zweier Abdeckelemente, zweier Hebelelemente und eines Steuerelements für die elektrische Steckdose gemäß der bevorzugten Ausführungsform der Erfindung,
- FIG 12: eine Seitenansicht des Steuerelements für die elektrische Steckdose gemäß der bevorzugten Ausführungsform der Erfindung,
- FIG 13: eine Perspektivansicht der zwei Abdeckelemente, der zwei Hebelelemente und eines Steuerelements für die elektrische Steckdose gemäß der bevorzugten Ausführungsform der Erfindung,
- FIG 14: eine weitere Perspektivansicht der zwei Abdeckelemente, der zwei Hebelelemente und eines Steuerelements für die elektrische Steckdose gemäß der bevorzugten Ausführungsform der Erfindung,
- FIG 15: eine Schnittansicht der elektrischen Steckdose mit dem aufgesetzten elektrischen Stecker gemäß der bevorzugten Ausführungsform der Erfindung,
- FIG 16: eine Schnittansicht der elektrischen Steckdose mit dem teilweise eingeführten elektrischen Stecker gemäß der bevorzugten Ausführungsform der Erfindung,
- FIG 17: eine perspektivische Schnittansicht der elektrischen Steckdose in dem teilweise geschlossenen und teilweise geöffneten Zustand gemäß der bevorzugten Ausführungsform der Erfindung, und
- FIG 18: eine perspektivische Schnittansicht der elektrischen Steckdose in dem geöffneten Zustand gemäß der bevorzugten Ausführungsform der Erfindung.

In allen Figuren sind gleiche Teile durch die gleichen Bezugszeichen gekennzeichnet.

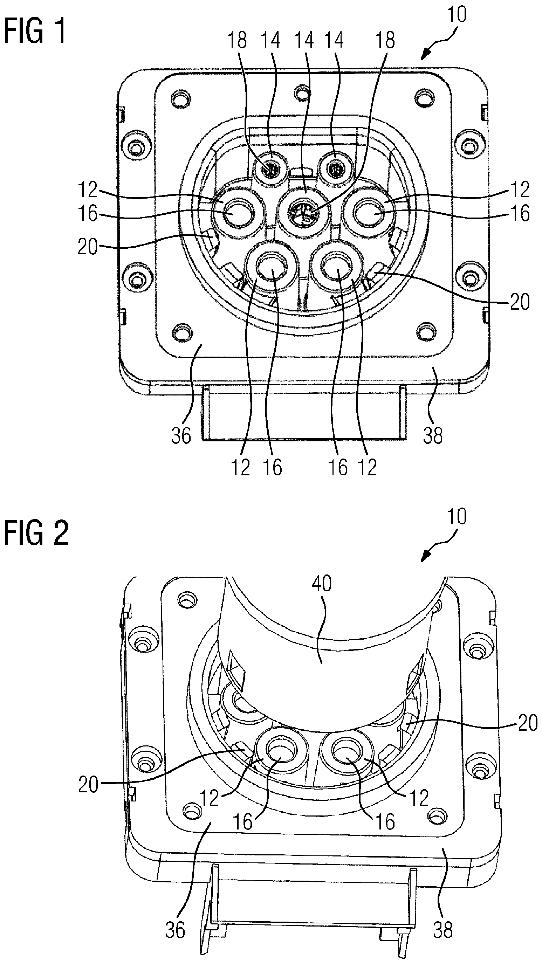

FIG 1 zeigt eine Perspektivansicht einer elektrischen Steckdose 10 gemäß einer bevorzugten Ausführungsform der Erfindung. Die elektrische Steckdose 10 ist zum Einführen eines elektrischen Steckers 40 vorgesehen.

Die elektrische Steckdose 10 weist Kontaktbuchsen 12 mit jeweils einem Abdeckelement 16 auf. Die Kontaktbuchsen 12 sind zum Einführen von elektrischen Kontaktstiften 42 des elektrischen Steckers 40 vorgesehen. Die Abdeckelemente 16 sind zum Öffnen und Schließen der Kontaktbuchsen 12 und zum Abdecken von elektrischen Kontaktelementen 18, die innerhalb der Kontaktbuchsen 12 angeordnet sind, vorgesehen. Die Abdeckelemente 16 sind zwischen einem geöffneten und geschlossenen Zustand senkrecht zur Einführrichtung der elektrischen Kontaktstifte 42 verschiebbar. In FIG 1 ist der geschlossene Zustand dargestellt. Insbesondere sind die Kontaktbuchsen 12 mit den Abdeckelementen 16 für hohe elektrische Spannungen vorgesehen. In dieser Ausführungsform weist die elektrische Steckdose 10 vier Kontaktbuchsen 12 mit jeweils einem Abdeckelement 16 auf. Beispielsweise sind die vier Kontaktbuchsen 12 für die drei Phasenkontakte und den Nullleiterkontakt eines Drehstromanschlusses vorgesehen. Die elektrische Steckdose 10 ist mit dem Ende eines elektrischen Kabels verbunden, wobei die Adern des Kabels meist mit verschiedenen elektrischen Kontaktelementen 18 verbunden sind. Die elektrische Steckdose 10 kann stationär installiert oder als mobile Steckdose verwendet werden.

Außerdem umfasst die elektrische Steckdose 10 weitere Kontaktbuchsen 14, die keine Abdeckelemente aufweisen. Die weiteren Kontaktbuchsen 14 ohne Abdeckelemente sind insbesondere für niedrige elektrische Spannungen vorgesehen. In diesem Beispiel ist die weitere Kontaktbuchse 14 im zentralen Bereich der elektrischen Steckdose 10 für den Masseanschluss vorgesehen. Die übrigen weiteren Kontaktbuchsen 14 der elektrischen Steckdose 10 können für Steuer- und/oder Kontrollsignale verwendet werden.

Weiterhin weist die elektrische Steckdose 10 eine Abdeckplatte 36 und einen Abdeckrahmen 38 auf, die auf der Stirnseite der elektrischen Steckdose 10 angebracht sind. Als "Stirnseite" der elektrischen Steckdose 10 ist diejenige Seite definiert, an welcher der elektrische Stecker 40 einführbar ist, und zwar unabhängig von der Ausrichtung und Orientierung der elektrischen Steckdose 10. Die Abdeckplatte 36 weist im zentralen Bereich eine Öffnung auf, so dass die Kontaktbuchsen 12 und die weiteren Kontaktbuchsen 14 zugänglich sind. Die Öffnung der Abdeckplatte 36 ist zum Einführen des elektrischen Steckers 40 vorgesehen. Vorzugsweise ist der Querschnitt der Öffnung der Abdeckplatte 36 geringfügig größer als der Querschnitt des elektrischen Steckers 40. Der Abdeckrahmen 38 umschließt die Abdeckplatte 36.

Schließlich weist die elektrische Steckdose 10 zwei Steuerelemente 20 auf, die beim Einführen des elektrischen Steckers 40 entlang der Einführrichtung der elektrischen Kontaktstifte 42 verschoben werden. Zwischen den Steuerelementen 20 und den Abdeckelementen 16 besteht eine Zwangskopplung, so dass die Abdeckelemente 16 während des Einführens des elektrischen Steckers 40 nach außen verschoben und die Kontaktbuchsen 12 geöffnet werden. In diesem Beispiel weist die elektrische Steckdose 10 zwei Steuerelemente 20 auf, die jeweils mit zwei benachbarten Abdeckelementen 16 gekoppelt sind. Alternativ dazu könnte auch jedem Abdeckelement 16 ein einzelnes Steuerelement 20 zugeordnet sein.

In FIG 2 ist eine Perspektivansicht der elektrischen Steckdose 10 mit dem elektrischen Stecker 40 gemäß der bevorzugten Ausführungsform der Erfindung dargestellt. Der elektrische Stecker 40 weist eine Hülse auf, deren Stirnseite die Steuerelemente 20 der elektrischen Steckdose 10 während des Einführens des elektrischen Steckers 40 parallel zur Einführrichtung verschiebt. Der elektrische Stecker 40 ist mit dem Ende eines elektrischen Kabels verbunden, wobei die Adern des Kabels meist mit verschiedenen elektrischen Kontaktstiften 42 verbunden sind.

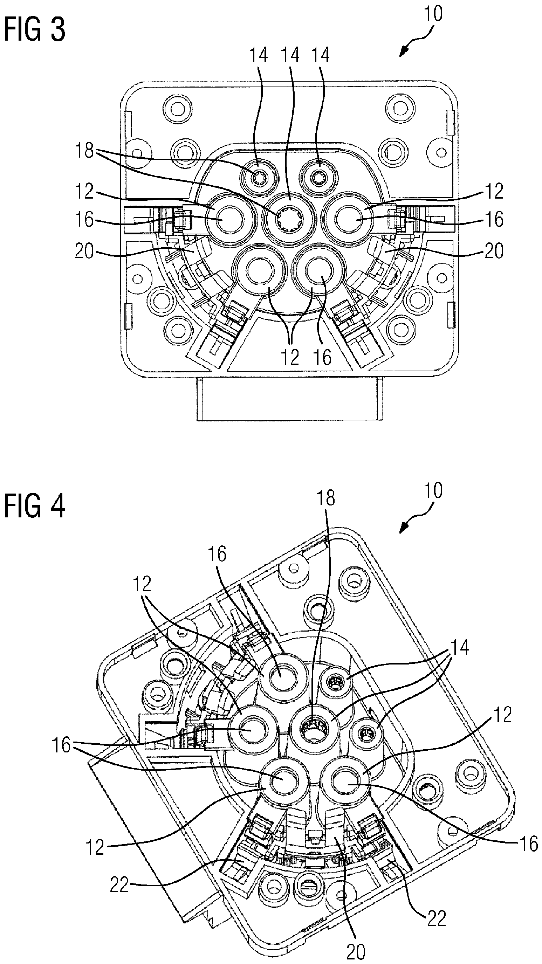

FIG 3 zeigt eine Vorderansicht der elektrischen Steckdose 10 in einem geschlossenen Zustand gemäß der bevorzugten Ausführungsform der Erfindung. Als "Vorderansicht" ist die Sicht auf die Stirnseite der elektrischen Steckdose 10 definiert.

Die elektrische Steckdose 10 weist die vier Kontaktbuchsen 12 mit jeweils einem Abdeckelement 16 und die drei weiteren Kontaktbuchsen 14 ohne Abdeckelemente auf. Sowohl in den vier Kontaktbuchsen 12 als auch in den drei weiteren Kontaktbuchsen 14 sind elektrische Kontaktelemente 18 angeordnet. Jeweils zwei äußere benachbarte Kontaktbuchsen 12 sind einem Steuerelement 20 zugeordnet, das sich zwischen diesen Kontaktbuchsen 12 befindet. Das Steuerelement 20 ist jeweils mit zwei Abdeckelementen 16 der benachbarten Kontaktbuchsen 12 gekoppelt.

Vorzugsweise sind die vier Kontaktbuchsen 12 für die drei Phasenkontakte und den Nullleiterkontakt des Drehstromanschlusses vorgesehen, während die weitere Kontaktbuchse 14 im zentralen Bereich der elektrischen Steckdose 10 für den Masseanschluss verwendet wird. Die beiden übrigen weiteren Kontaktbuchsen 14 der elektrischen Steckdose 10 können beispielsweise für Steuer- und/oder Kontrollsignale vorgesehen sein.

In FIG 4 ist eine Perspektivansicht der elektrischen Steckdose 10 in dem geschlossenen Zustand gemäß der bevorzugten Ausführungsform der Erfindung dargestellt.

Die elektrische Steckdose 10 gemäß der bevorzugten Ausführungsform weist außerdem vier Hebelelemente 22 auf, die jeweils einem der Abdeckelemente 16 zugeordnet sind. Die Steuerelemente 20 sind über die entsprechenden Hebelelemente 22 mit den zugeordneten Abdeckelementen 16 gekoppelt.

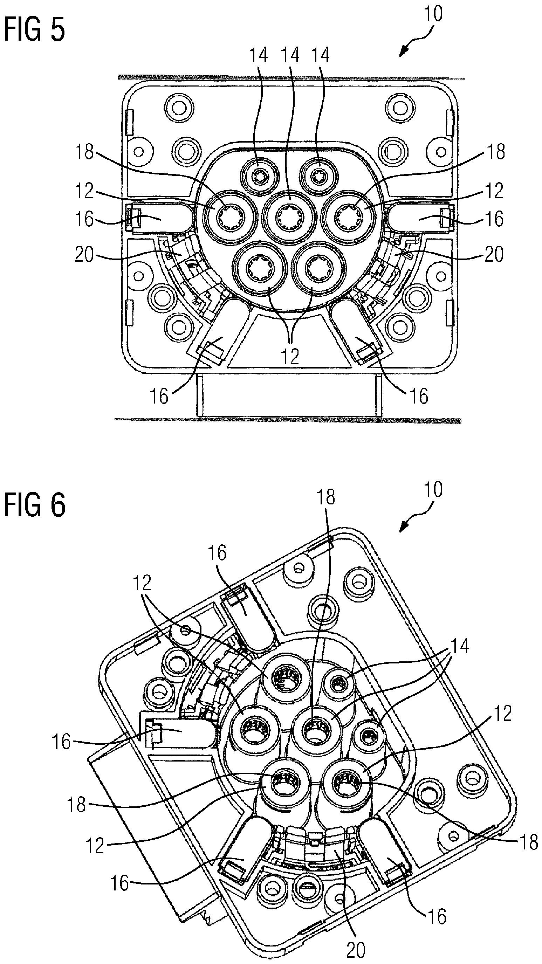

FIG 5 zeigt eine Vorderansicht der elektrischen Steckdose 10 in einem geöffneten Zustand gemäß der bevorzugten Ausführungsform der Erfindung. In FIG 5 sind die vier Kontaktbuchsen 12 geöffnet und die entsprechenden Abdeckelemente 16 nach außen verschoben. Das Verschieben der Abdeckelemente 16 und das Öffnen der Kontaktbuchsen 12 wird durch das Verschieben der Steuerelemente 20 entlang der Einführrichtung des elektrischen Steckers 40 bewirkt.

In FIG 6 ist eine Perspektivansicht der elektrischen Steckdose 10 in dem geöffneten Zustand gemäß der bevorzugten Ausführungsform der Erfindung dargestellt. FIG 6 verdeutlicht die Anordnung der Abdeckelemente 16 außerhalb der entsprechenden Kontaktbuchsen 12 in dem geöffneten Zustand der elektrischen Steckdose 10.

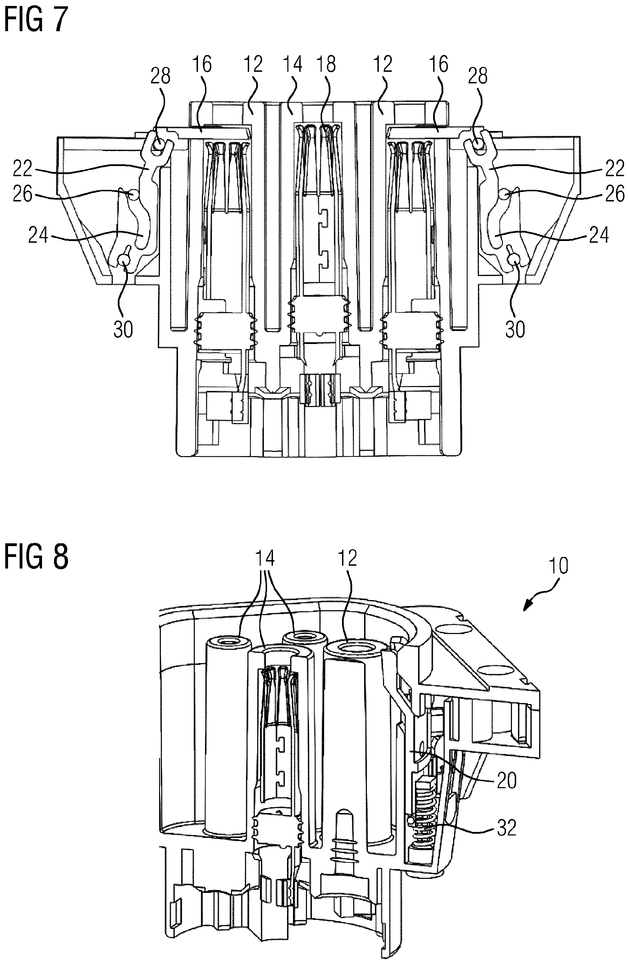

FIG 7 zeigt eine Schnittansicht der elektrischen Steckdose 10 in dem geschlossenen Zustand gemäß der bevorzugten Ausführungsform der Erfindung. Die Stirnseite der elektrischen Steckdose 10, an welcher der elektrische Stecker 40 eingeführt wird, befindet sich in FIG 7 oben. Durch die Abdeckelemente 16 sind die Kontaktbuchsen 12 geschlossen und die elektrischen Kontaktelemente 18 abgedeckt.

Die Hebelelemente 22 sind zwischen den entsprechenden Abdeckelementen 16 und dem Gehäuse der elektrischen Steckdose 10 gekoppelt. Zwischen zwei benachbarten Abdeckelementen 16 einerseits und dem Hebelelement 22 andererseits ist jeweils ein erstes Gelenk 28 ausgebildet. Die ersten Gelenke 28 sind vorzugsweise Scharniergelenke, deren Schwenkachsen sich senkrecht zur Einführrichtung der elektrischen Kontaktstifte 42 des elektrischen Steckers 40 erstrecken. Zwischen den Hebelelementen 22 und dem Gehäuse der elektrischen Steckdose 10 ist jeweils ein zweites Gelenk 30 ausgebildet. Vorzugsweise sind die zweiten Gelenke 30 ebenfalls Scharniergelenke, deren Schwenkachse sich senkrecht zur Einführrichtung der elektrischen Kontaktstifte 42 des elektrischen Steckers 40 erstrecken. Somit sind die Hebelelemente 22 an dem Gehäuse der elektrischen Steckdose 10 schwenkbar angebracht. Auf diese Weise ist jedes Abdeckelement 16 über ein Doppelgelenk mit dem Gehäuse der elektrischen Steckdose 10 verbunden.

Die Hebelelemente 22 weisen jeweils wenigstens eine Kulissenführung 24 auf. In diesem Beispiel ist die Kulissenführung 24 als S-förmige Nut ausgebildet und erstreckt sich im Wesentlichen entlang der Einführrichtung der Kontaktstifte 42 des elektrischen Steckers 40. Weiterhin könnte die Kulissenführung 24 auch als S-förmiger Schlitz ausgebildet sein. Das Steuerelement 20 weist zwei Kulissenzapfen 26 auf, die jeweils in die Kulissenführungen 24 der benachbarten Hebelelemente 22 eingeführt sind. Die Kulissenzapfen 26 erstrecken sich senkrecht zur Einführrichtung der elektrischen Kontaktstifte 42 des elektrischen Steckers 40. Weiterhin sind die Kulissenzapfen 26 am Steuerelement 20 im Wesentlichen entgegengerichtet angeordnet.

Die Bewegung der Steuerelemente 20 entlang der Einführrichtung der elektrischen Kontaktstifte 42 des elektrischen Steckers 40 bewirkt eine Schwenkbewegung der daran gekoppelten Hebelelemente 22. Die Schwenkbewegung der Hebelelemente 22 bewirkt wiederum die Verschiebung der entsprechenden Abdeckelemente 16 zwischen dem geöffneten und geschlossenen Zustand.

Das Einführen der elektrischen Kontaktstifte 42 des elektrischen Steckers 40 bewirkt eine Verschiebung der Steuerelemente 20 in die Einführrichtung, eine Schwenkbewegung der Hebelelemente 22 nach außen und eine Verschiebung der Abdeckelemente 16 nach außen. Dadurch werden die Kontaktbuchsen 12 geöffnet.

In FIG 8 ist eine perspektivische Schnittansicht der elektrischen Steckdose 10 in dem geschlossenen Zustand gemäß der bevorzugten Ausführungsform der Erfindung dargestellt.

Die elektrische Steckdose 10 umfasst weiterhin Druckfedern 32, die jeweils zwischen dem entsprechenden Steuerelement 20 und dem Gehäuse der elektrischen Steckdose 10 angeordnet sind. Im geschlossenen Zustand der elektrischen Steckdose 10 befinden sich die Druckfedern 32 in einem entspannten Zustand. Dagegen befinden sich im geöffneten Zustand der elektrischen Steckdose 10 die Druckfedern 32 in einem vorgespannten Zustand. Die Druckfedern 32 bewirken die Bewegung der Steuerelemente 20 entgegen der Einführrichtung der elektrischen Kontaktstifte 42 und somit den Übergang vom geöffneten Zustand zum geschlossenen Zustand der elektrischen Steckdose 10.

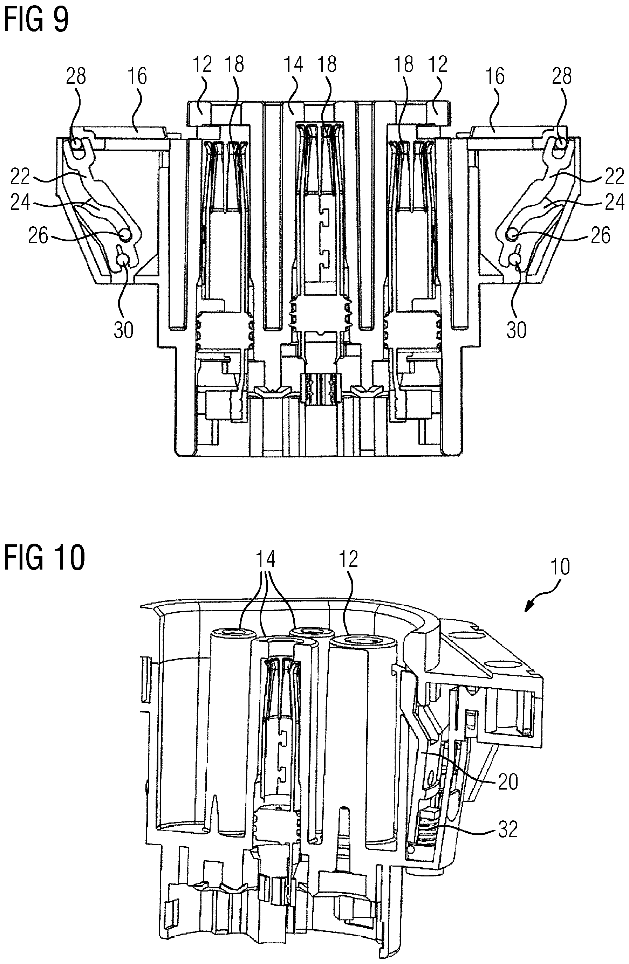

FIG 9 zeigt eine Schnittansicht der elektrischen Steckdose 10 in dem geöffneten Zustand gemäß der bevorzugten Ausführungsform der Erfindung.

Die Stirnseite der elektrischen Steckdose 10, an welcher der elektrische Stecker 40 eingeführt wird, befindet sich in FIG 9 oben. Durch die nach außen verschobenen Abdeckelemente 16 sind die Kontaktbuchsen 12 geöffnet. Die Hebelelemente 22 zwischen den entsprechenden Abdeckelementen 16 und dem Gehäuse der elektrischen Steckdose 10 sind nach außen geschwenkt. Die ersten Gelenke 28 sind zwischen den Abdeckelementen 16 und den entsprechenden Hebelelementen 22 ausgebildet. Die zweiten Gelenke 30 sind zwischen den Hebelelementen 22 und dem Gehäuse der elektrischen Steckdose 10 ausgebildet. In dieser Ausführungsform sind die Gelenke 28 und 30 Scharniergelenke, deren Schwenkachsen sich senkrecht zur Einführrichtung der elektrischen Kontaktstifte 42 des elektrischen Steckers 40 erstrecken.

Die Verschiebung der Steuerelemente 20 entlang der Einführrichtung der elektrischen Kontaktstifte 42 wird durch das Einführen des elektrischen Steckers 40 bewirkt. Dadurch werden die Kulissenzapfen 26 an den Steuerelementen 20 entlang der S-förmigen Kulissenführungen 24 an den Hebelelementen 22 verschoben, die Hebelelemente 22 nach außen geschwenkt, die Abdeckelemente 16 nach außen verschoben und die Kontaktbuchsen 12 geöffnet.

In FIG 10 ist eine perspektivische Schnittansicht der elektrischen Steckdose 10 in dem geöffneten Zustand gemäß der bevorzugten Ausführungsform der Erfindung dargestellt.

In dem geöffneten Zustand sind die Druckfedern 32 zwischen den entsprechenden Steuerelementen 20 und dem Gehäuse der elektrischen Steckdose 10 vorgespannt. Die vorgespannten Druckfedern 32 gewährleisten, dass die Steuerelemente 20 nach Herausziehen des elektrischen Steckers 40 entgegen der Einführrichtung der elektrischen Kontaktstifte 12 zurückbewegt, die Abdeckelemente 16 nach innen verschoben und die Kontaktbuchsen 12 wieder geschlossen werden.

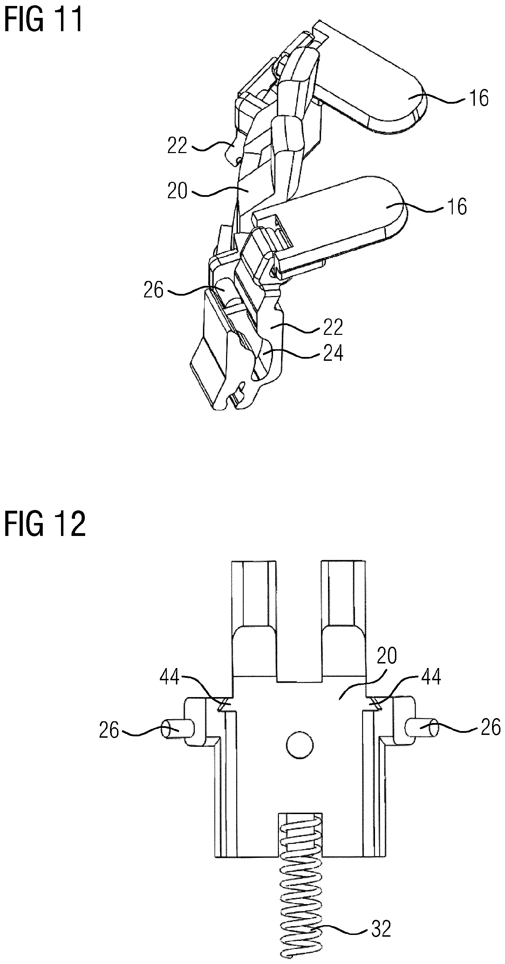

FIG 11 zeigt eine Perspektivansicht der zwei Abdeckelemente 16, der zwei Hebelelemente 22 und des Steuerelements 20 für die elektrische Steckdose 10 gemäß der bevorzugten Ausführungsform der Erfindung.

Das Steuerelement 20 ist zwischen den beiden Hebelelementen 22 angeordnet. Die beiden Kulissenzapfen 26 des Steuerelements 20 befinden sich in den Kulissenführungen 24 der Hebelelemente 26, und zwar jeweils in derjenigen Position, die dem geschlossenen Zustand der elektrischen Steckdose 10 entspricht. FIG 11 verdeutlicht, dass eine Bewegung der Kulissenzapfen 26 des Steuerelements 20 entlang der S-förmigen Kulissenführungen 24 die Schwenkbewegung der beiden Hebelelemente 22 bewirkt. Die Schwenkbewegung der Hebelelemente 22 bewirkt wiederum die Verschiebung der Abdeckelemente 16.

In FIG 12 ist eine Seitenansicht des Steuerelements 20 für die elektrische Steckdose 10 gemäß der bevorzugten Ausführungsform der Erfindung dargestellt.

Das Steuerelement 20 weist die beiden Kulissenzapfen 26 auf, die jeweils in die Kulissenführungen 24 der benachbarten Hebelelemente 22 eingeführt sind. Die Kulissenzapfen 26 erstrecken sich senkrecht zur Einführrichtung der elektrischen Kontaktstifte 42 des elektrischen Steckers 40 und sind am Steuerelement 20 entgegengerichtet angeordnet. Die Druckfeder 32 ist zwischen dem Steuerelement 20 und dem Gehäuse der elektrischen Steckdose 10 angeordnet und bewirkt die Bewegung des Steuerelements 20 entgegen der Einführrichtung der elektrischen Kontaktstifte 42. Wenn der elektrische Stecker 40 aus der elektrischen Steckdose 10 herausgezogen wird, bewirkt die Druckfeder 32 den Übergang vom geöffneten Zustand zum geschlossenen Zustand der elektrischen Steckdose 10.

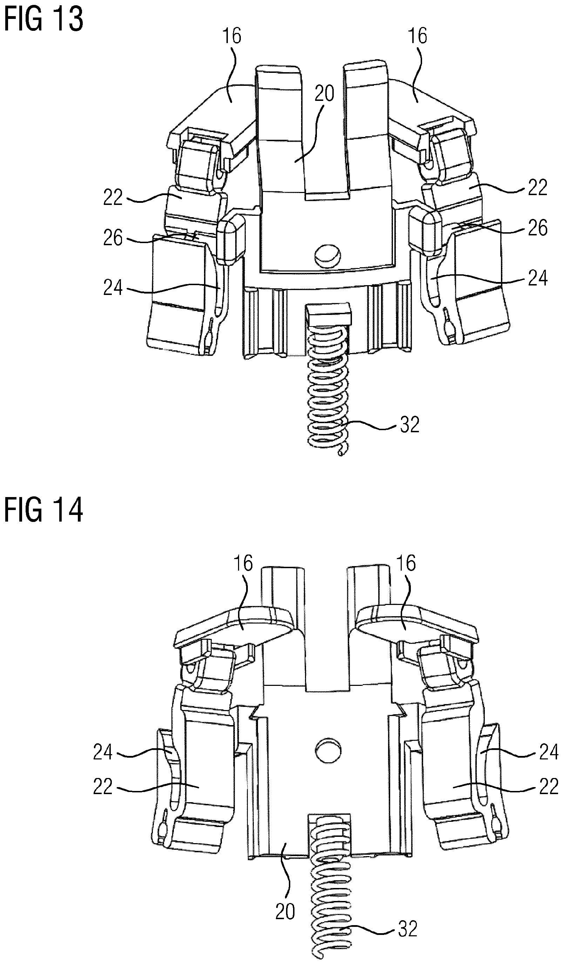

FIG 13 zeigt eine Perspektivansicht der zwei Abdeckelemente 16, der zwei Hebelelemente 22 und des Steuerelements 20 für die elektrische Steckdose 10 gemäß der bevorzugten Ausführungsform der Erfindung.

Die Hebelelemente 22 sind an beiden Seiten des Steuerelements 20 angeordnet. Die beiden Kulissenzapfen 26 des Steuerelements 20 befinden sich in den Kulissenführungen 24 der Hebelelemente 26. Die Position der Kulissenzapfen 26 entspricht dem geschlossenen Zustand der elektrischen Steckdose 10. Eine Bewegung der beiden Kulissenzapfen 26 des Steuerelements 20 entlang der S-förmigen Kulissenführungen 24 würde die Schwenkbewegung der beiden Hebelelemente 22 und die Verschiebung der Abdeckelemente 16 bewirken. Die Druckfeder 32 befindet sich in dem entspannten Zustand.

In FIG 14 ist eine weitere Perspektivansicht der zwei Abdeckelemente 16, der zwei Hebelelemente 22 und des Steuerelements 20 für die elektrische Steckdose 10 gemäß der bevorzugten Ausführungsform der Erfindung dargestellt. FIG 14 zeigt den gleichen Zustand, insbesondere die gleichen Positionen der Kulissenzapfen 26 des Steuerelements 20 in den Kulissenführungen 24 der Hebelelemente 26, wie in FIG 13, wobei die zwei Abdeckelemente 16, die zwei Hebelelemente 22 und das Steuerelement 20 von der gegenüberliegenden Seite aus dargestellt sind.

Bei der bevorzugten Ausführungsform ist das Steuerelement 20 zwei Hebelelementen 22 und zwei Abdeckelementen 16 zugeordnet, wobei das Steuerelement 20 zwischen den beiden Hebelelementen 22 angeordnet ist. Bei einer alternativen Ausführungsform kann das Steuerelement 20 einem Hebelelement 22 und einem Abdeckelement 16 zugeordnet sein, wobei das Steuerelement 20 neben dem Hebelelement 22 angeordnet ist. Wenn die räumlichen Verhältnisse es zulassen, kann im letztgenannten Fall das Steuerelement 20 auch außerhalb des Hebelelements 22 angeordnet sein. Bei einer weiteren Ausführungsform können zwei Steuerelemente 20 einem Hebelelement 22 und einem Abdeckelement 16 zugeordnet sein, wobei vorzugsweise das Hebelelement 22 und das Abdeckelement 16 zwischen den beiden Steuerelementen 20 angeordnet wäre.

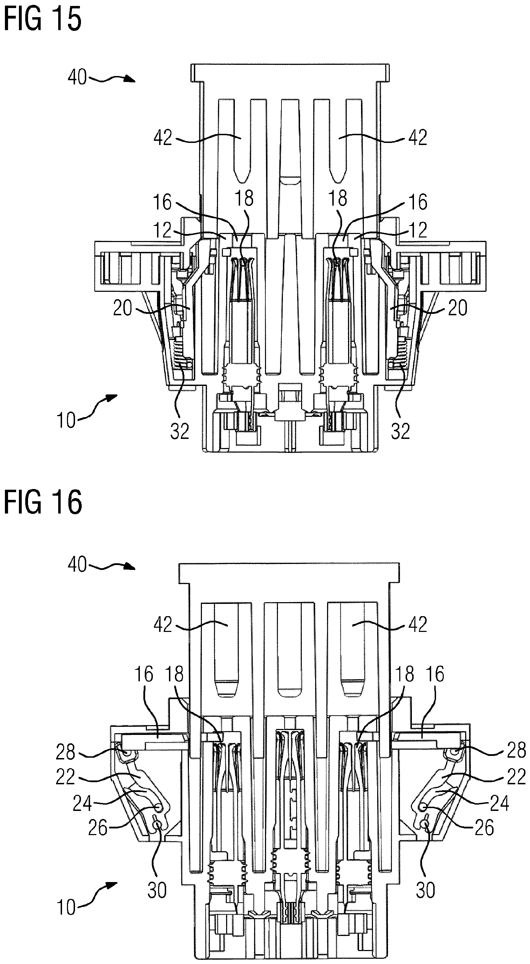

FIG 15 zeigt eine Schnittansicht der elektrischen Steckdose 10 mit dem aufgesetzten elektrischen Stecker 40 gemäß der bevorzugten Ausführungsform der Erfindung.

Die elektrische Steckdose 10 befindet sich im geschlossenen Zustand, da die Steuerelemente 20 noch nicht durch den elektrischen Stecker 40 bewegt worden sind. Dementsprechend sind die Druckfedern 32 im entspannten Zustand und die Abdeckelemente 16 schließen die Kontaktbuchsen 12.

In FIG 16 ist eine Schnittansicht der elektrischen Steckdose 10 mit dem teilweise eingeführten elektrischen Stecker 40 gemäß der bevorzugten Ausführungsform der Erfindung dargestellt.

Die elektrische Steckdose 10 befindet sich im geöffneten Zustand. Die Steuerelemente 20 wurden durch den elektrischen Stecker 40 bewegt, die Hebelelemente 22 nach außen geschwenkt und die Abdeckelemente 16 nach außen geschoben, so dass die Kontaktbuchsen 12 geöffnet sind. Die elektrischen Kontaktstifte 42 des elektrischen Steckers 40 können nun in die Kontaktbuchsen 12 eingeführt werden.

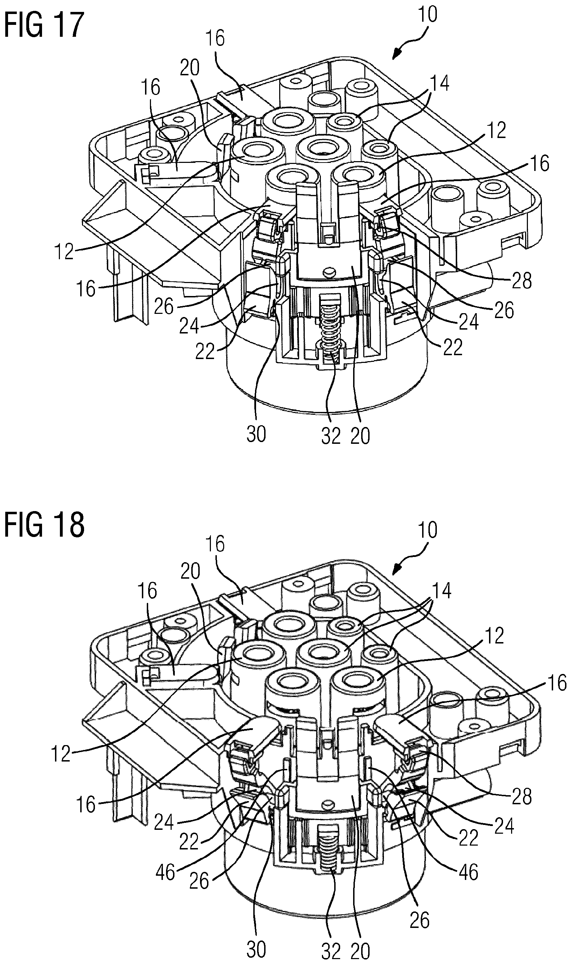

FIG 17 zeigt eine perspektivische Schnittansicht der elektrischen Steckdose 10 in dem teilweise geschlossenen und teilweise geöffneten Zustand gemäß der bevorzugten Ausführungsform der Erfindung.

In FIG 17 befinden sich das vordere Steuerelement 20 und die zugeordneten Hebelelemente 22, Abdeckelemente 16 und Kontaktbuchsen 12 im geschlossenen Zustand, während sich das hintere Steuerelement 20 und die zugeordneten Hebelelemente 22, Abdeckelemente 16 und Kontaktbuchsen 12 im geöffneten Zustand befinden. Die vordere Druckfeder 32 ist im entspannten Zustand, während sich die nicht sichtbare hintere Druckfeder 32 im vorgespannten Zustand befindet. Die beiden Steuerelemente 20 in FIG 17 verdeutlichen deren unterschiedliche Positionen im geschlossenen und geöffneten Zustand der elektrischen Steckdose 10.

In FIG 18 ist eine perspektivische Schnittansicht der elektrischen Steckdose 10 in dem geöffneten Zustand gemäß der bevorzugten Ausführungsform der Erfindung dargestellt.

FIG 18 zeigt beide Steuerelemente 20 und die zugeordneten Hebelelemente 22, Abdeckelemente 16 und Kontaktbuchsen 12 im geöffneten Zustand. Beide Druckfedern 32 befinden sich im vorgespannten Zustand. Bei dieser Ausführungsform umfassen die Kontaktbuchsen 12 jeweils eine seitliche Öffnung, durch die das Abdeckelement 16 eindringbar ist. In diesem Bespiel ist die seitliche Öffnung als Schlitz ausgebildet, der auch als Führung für das Abdeckelement dient. Der Platzbedarf für die nach außen verschobenen Abdeckelemente 16 ist verhältnismäßig gering, so dass die erfindungsgemäße elektrische Steckdose 10 relativ kompakt ausgestaltet sein kann.

FIG 12 zeigt zwei am Steuerelement 20 ausgebildete Führungsnasen 44. Diese korrespondieren mit zwei Führungsschienen 46, die in FIG 18 gezeigt sind, und zwar derart, dass die Führungsnasen 44 im geschlossenen Zustand des Abdeckelements 16 seitlich vor einer Stirnseite der Führungsschiene 46 angeordnet sind und bei der Bewegung des Steuerelements 20 parallel zur Einführrichtung des elektrischen Kontaktstiftes 42 entlang einer Längsseite der Führungsschienen 46 bewegbar sind, wobei bei dieser Bewegung die gekoppelten Abdeckelemente 16 in den geöffneten Zustand bewegt werden, und bei einer von der vorgesehenen Parallelbewegung über ein vorgegebenes Spiel hinausgehenden Abweichung an der Stirnseite der Führungsschienen 46 anschlagen und dadurch eine weitere Bewegung des Steuerelements 20 und damit eine Bewegung der gekoppelten Abdeckelements 16 in den geöffneten Zustand verhindert wird.

Der erfindungsgemäße Mechanismus zwischen dem Steuerelement 20 und den Abdeckelementen 16 hat einen geringen Reibungswiderstand. Dies ermöglicht eine zuverlässige Funktion der elektrischen Steckdose 10. Weiterhin kann der Benutzer den elektrischen Stecker 40 ohne nennenswerten Widerstand in die elektrische Steckdose 10 einführen. Außerdem ermöglicht der Mechanismus zwischen dem Steuerelement 20 und den Abdeckelementen 16 eine kompakte Bauweise.

Bei der bevorzugten Ausführungsform der Erfindung handelt es sich um eine elektrische Steckdose 10, die mit einem elektrischen Stecker 40 gekoppelt oder koppelbar ist. Im Allgemeinen betrifft die Erfindung eine elektrische Kupplung, die mit einer zumindest teilweise komplementär ausgebildeten elektrischen Kupplung gekoppelt oder koppelbar ist. Beispielsweise können die elektrische Kupplung und auch die komplementäre elektrische Kupplung sowohl elektrische Kontaktstifte 42 als auch Kontaktbuchsen 12 mit elektrischen Kontaktelementen 18 aufweisen.

### Bezugszeichenliste

- 10: Elektrische Kupplung, hier eine elektrische Steckdose
- 12: Kontaktbuchse
- 14: weitere Kontaktbuchse
- 16: Abdeckelement
- 18: elektrisches Kontaktelement
- 20: Steuerelement
- 22: Hebelelement
- 24: Kulissenführung
- 26: Kulissenzapfen
- 28: erstes Gelenk
- 30: zweites Gelenk
- 32: Federelement, hier eine Druckfeder
- 36: Abdeckplatte
- 38: Abdeckrahmen
- 40: Weitere elektrische Kupplung, hier ein elektrischer Stecker
- 42: elektrischer Kontaktstift
- 44: Führungsnasen
- 46: Führungsschienen

## Patentansprüche

1. Elektrische Kupplung (10), die mit einer weiteren elektrischen Kupplung (40) koppelbar ist, wobei die elektrische Kupplung (10) zu der weiteren elektrischen Kupplung (40) zumindest bereichsweise komplementär ausgebildet ist, und wobei die elektrische Kupplung (10) Folgendes aufweist:
- wenigstens eine Kontaktbuchse (12) zum Einführen eines elektrischen Kontaktstiftes (42) der weiteren elektrischen Kupplung (40),
- wenigstens ein elektrisches Kontaktelement (18), das in der Kontaktbuchse (12) angeordnet und mit dem elektrischen Kontaktstift (42) elektrisch verbindbar ist,
und
- wenigstens ein Abdeckelement (16) zum Schließen der Kontaktbuchse (12) und/oder Abdecken des elektrischen Kontaktelements (18), wobei das Abdeckelement (16) zwischen einem geschlossenen und geöffneten Zustand senkrecht zur Einführrichtung des elektrischen Kontaktstiftes (42) bewegbar ist,
die elektrische Kupplung **gekennzeichnet durch**,
- wenigstens ein Steuerelement (20), das durch die weitere elektrische Kupplung (40) im Wesentlichen parallel zur Einführrichtung des elektrischen Kontaktstiftes (42) bewegbar ist,
- wenigstens ein Federelement (32), durch das das Steuerelement (20) entgegen der Einführrichtung des elektrischen Kontaktstiftes (42) bewegbar ist, und
- eine Zwangskopplung (22, 24, 26, 28, 30) zwischen dem Steuerelement (20) und dem Abdeckelement (16), so dass das Abdeckelement (16) nach außen verschiebbar ist, während die weitere elektrische Kupplung (40) an die elektrische Kupplung (10) gekoppelt wird.

2. Elektrische Kupplung (10) nach Anspruch 1,
**dadurch gekennzeichnet, dass**
die elektrische Kupplung (10) eine elektrische Steckdose (10) und
die weitere elektrische Kupplung (40) ein elektrischer Stecker ist.

3. Elektrische Kupplung (10) nach Anspruch 1 oder 2,
**dadurch gekennzeichnet, dass**
das Federelement (32) eine Druckfeder (32) ist.

4. Elektrische Kupplung (10) nach einem der vorhergehenden Ansprüche,
**dadurch gekennzeichnet, dass**
die elektrische Kupplung (10) wenigstens ein Hebelelement (22) aufweist, das mit dem Abdeckelement (16) und einem Gehäuse der elektrischen Kupplung (10) verbunden und mittels des Steuerelements (20) schwenkbar ist.

5. Elektrische Kupplung (10) nach Anspruch 4,
**dadurch gekennzeichnet, dass**
das Hebelelement (22) über ein erstes Gelenk (28) mit dem Abdeckelement (16) und über ein zweites Gelenk (30) mit dem Gehäuse der elektrischen Kupplung (10) verbunden ist.

6. Elektrische Kupplung (10) nach Anspruch 5,
**dadurch gekennzeichnet, dass**
das erste Gelenk (28) und/oder das zweite Gelenk (30) als Scharniergelenk ausgebildet sind.

7. Elektrische Kupplung (10) nach einem der Ansprüche 4 bis 6,
**dadurch gekennzeichnet, dass**
das Hebelelement (22) wenigstens eine Kulissenführung (24) und das Steuerelement (20) wenigstens einen Kulissenzapfen (26) aufweist, wobei der Kulissenzapfen (26) in die Kulissenführung (24) eindringt und entlang der Kulissenführung (24) verschiebbar ist.

8. Elektrische Kupplung (10) nach Anspruch 7,
**dadurch gekennzeichnet, dass**
die Kulissenführung (24) zwischen dem ersten Gelenk (28) und zweiten Gelenk (30) angeordnet ist.

9. Elektrische Kupplung (10) nach Anspruch 7 oder 8,
**dadurch gekennzeichnet, dass**
die Kulissenführung (24) S-förmig ausgebildet ist, so dass durch die Bewegung des Steuerelements (20) entlang der Einführrichtung des elektrischen Kontaktstiftes (42) das Hebelelement (22) nach außen geschwenkt, das Abdeckelement (16) nach außen verschoben und die Kontaktbuchse (12) geöffnet wird.

10. Elektrische Kupplung (10) nach einem der Ansprüche 4 bis 9,
**dadurch gekennzeichnet, dass**
einem Steuerelement (20) zwei Hebelelemente (22) und zwei Abdeckelemente (16) zugeordnet sind.

11. Elektrische Kupplung (10) nach Anspruch 10,
**dadurch gekennzeichnet, dass**
das Steuerelement (20) zwischen den Hebelelementen (22) angeordnet ist.

12. Elektrische Kupplung (10) nach einem der vorhergehenden Ansprüche,
**dadurch gekennzeichnet, dass**
die Kontaktbuchse (12) eine seitliche Öffnung aufweist, durch die das Abdeckelement (16) zum Abdecken des elektrischen Kontaktelements (18) in die Kontaktbuchse (12) eindringbar ist oder eindringt.

13. Elektrische Kupplung (10) nach einem der vorhergehenden Ansprüche,
**dadurch gekennzeichnet, dass**
das Steuerelement (20) wenigstens eine Führungsnase (44) und die elektrische Kupplung (10) wenigstens eine mit der Führungsnase (44) korrespondierende Führungsschiene (46) aufweist, wobei die Führungsnase (44) im geschlossenen Zustand des Abdeckelements (16) seitlich vor einer Stirnseite der Führungsschiene (46) angeordnet ist, wobei die Führungsnase (44) bei der Bewegung des Steuerelements (20) parallel zur Einführrichtung des elektrischen Kontaktstiftes (42) entlang einer Längsseite der Führungsschiene (46) bewegbar ist und bei einer von der vorgesehenen Parallelbewegung über ein vorgegebenes Spiel hinausgehenden Abweichung an der Stirnseite der Führungsschiene (46) anschlägt und dadurch eine weitere Bewegung des Steuerelements (20) und damit eine Bewegung des Abdeckelements (16) in den geöffneten Zustand verhindert wird.

14. Kupplungssystem umfassend eine elektrische Kupplung (10) nach einem der Ansprüche 1 bis 13 und eine weitere elektrische Kupplung (40),
wobei die weitere elektrische Kupplung (40) zumindest bereichsweise komplementär zu der elektrischen Kupplung (10) ausgebildet ist, und
wobei die weitere elektrische Kupplung (40) wenigstens ein Antriebselement aufweist, das zum Bewegen des Steuerelements (20) der elektrischen Kupplung (10) während der Kopplung der weiteren elektrischen Kupplung (40) an die elektrische Kupplung (10) vorgesehen ist.

## Claims

1. Electrical clutch (10) which can be coupled to a further electrical clutch (40), wherein the electrical clutch (10) is designed to be complementary to the further electrical clutch (40) at least in some areas, and wherein the electrical clutch (10) comprises the following:
- at least one contact socket (12) for inserting an electrical contact pin (42) of the further electrical coupling (40),
- at least one electrical contact element (18), which is arranged in the contact socket (12) and can be electrically connected to the electrical contact pin (42),
and
- at least one cover element (16) for closing the contact socket (12) and/or covering the electrical contact element (18), wherein the cover element (16) is movable between a closed and an open state perpendicular to the insertion direction of the electrical contact pin (42),
the electric clutch is **characterised by**
- at least one control element (20), which can be moved by the further electrical coupling (40) essentially parallel to the insertion direction of the electrical contact pin (42),
- at least one spring element (32), by means of which the control element (20) can be moved against the insertion direction of the electrical contact pin (42), and
- a force coupling (22, 24, 26, 28, 30) between the control element (20) and the cover element (16), so that the cover element (16) can be displaced outwards while the further electrical coupling (40) is coupled to the electrical coupling (10).

2. Electrical clutch (10) according to claim 1,
**characterised in that**
the electrical coupling (10) is an electrical socket (10) and the further electrical coupling (40) is an electrical plug.

3. Electrical clutch (10) according to claim 1or 2,
**characterised in that**
the spring element (32) is a compression spring (32).

4. Electrical clutch (10) according to one of the preceding claims,
**characterised in that**
the electric clutch (10) has at least one lever element (22), which is connected to the cover element (16) and a housing of the electric clutch (10) and can be swivelled by means of the control element (20).

5. Electrical clutch (10) according to claim 4,
**characterised in that**
the lever element (22) is connected to the cover element (16) via a first joint (28) and to the housing of the electric clutch (10) via a second joint (30).

6. Electrical clutch (10) according to claims,
**characterised in that**
the first joint (28) and/or the second joint (30) are designed as a hinge joint.

7. Electrical clutch (10) according to one of claims 4 to 6,
**characterised in that**
the lever element (22) has at least one link guide (24) and the control element (20) has at least one link pin (26), wherein the link pin (26) penetrates into the link guide (24) and is displaceable along the link guide (24).

8. Electrical clutch (10) according to claim 7
**characterised in that**
the link guide (24) is arranged between the first joint (28) and the second joint (30).

9. Electrical clutch (10) according to claim 7 or 8,
**characterised in that**
the link guide (24) is S-shaped, so that the movement of the control element (20) along the insertion direction of the electrical contact pin (42) swivels the lever element (22) outwards, displaces the cover element (16) outwards and opens the contact socket (12).

10. Electrical clutch (10) according to one of claims 4 to 9,
**characterised in that**
two lever elements (22) and two cover elements (16) are assigned to a control element (20).

11. Electrical clutch (10) according to claim 10
**characterised in that**
the control element (20) is arranged between the lever elements (22).

12. Electrical clutch (10) according to one of the preceding claims
**characterised in that**
the contact socket (12) has a lateral opening through which the cover element (16) for covering the electrical contact element (18) can penetrate or penetrates into the contact socket (12).

13. Electrical clutch (10) according to one of the preceding claims,
**characterised in that**
the control element (20) has at least one guide lug (44) and the electrical coupling (10) has at least one guide rail (46) corresponding to the guide lug (44), the guide lug (44) being arranged laterally in front of an end face of the guide rail (46) in the closed state of the cover element (16), wherein the guide lug (44) is movable along a longitudinal side of the guide rail (46) during the movement of the control element (20) parallel to the insertion direction of the electrical contact pin (42) and, in the event of a deviation from the intended parallel movement beyond a predetermined clearance, strikes against the end face of the guide rail (46), thereby preventing further movement of the control element (20) and thus movement of the cover element (16) into the open state.

14. Clutch system comprising an electric clutch (10) according to any one of claims 1 to 13 and a further electric clutch (40),
wherein the further electrical clutch (40) is designed to complement the electrical clutch (10) at least in certain areas, and
wherein the further electric clutch (40) comprises at least one drive element which is provided for moving the control element (20) of the electric clutch (10) during the coupling of the further electric clutch (40) to the electric clutch (10).

## Revendications

1. Couplage électrique (10), qui peut être couplé à un autre couplage électrique (40), le couplage électrique (10) étant conçu de manière complémentaire à l'autre couplage électrique (40) au moins par zones, et le couplage électrique (10) présentant les éléments suivants :
- au moins une douille de contact (12) pour l'introduction d'une broche de contact électrique (42) de l'autre couplage électrique (40),
- au moins un élément de contact électrique (18) qui est disposé dans la douille de contact (12) et qui peut être relié électriquement à la broche de contact électrique (42),
et
- au moins un élément de recouvrement (16) pour fermer la douille de contact (12) et/ou recouvrir l'élément de contact électrique (18), l'élément de recouvrement (16) étant mobile entre un état fermé et un état ouvert perpendiculairement à la direction d'insertion de la broche de contact électrique (42),
le couplage électrique **caractérisé par** ,
- au moins un élément de commande (20) qui peut être déplacé par l'autre couplage électrique (40) sensiblement parallèlement à la direction d'introduction de la broche de contact électrique (42),
- au moins un élément de ressort (32) par lequel l'élément de commande (20) peut être déplacé dans le sens opposé au sens d'insertion de la broche de contact électrique (42), et
- un couplage forcé (22, 24, 26, 28, 30) entre l'élément de commande (20) et l'élément de recouvrement (16), de sorte que l'élément de recouvrement (16) peut être déplacé vers l'extérieur tandis que l'autre couplage électrique (40) est couplé au couplage électrique (10).

2. Couplage électrique (10) selon la revendication 1,
**caractérisé en ce que**
le couplage électrique (10) est une prise électrique (10) et l'autre couplage électrique (40) est une fiche électrique.

3. Couplage électrique (10) selon la revendication 1ou 2,
**caractérisé en ce que**
l'élément de ressort (32) est un ressort de compression (32).

4. Couplage électrique (10) selon l'une des revendications précédentes,
**caractérisé en ce que**
le couplage électrique (10) présente au moins un élément de levier (22) qui est relié à l'élément de recouvrement (16) et à un boîtier de le couplage électrique (10) et qui peut pivoter au moyen de l'élément de commande (20).

5. Couplage électrique (10) selon la revendication 4,
**caractérisé en ce que**
l'élément de levier (22) est relié par une première articulation (28) à l'élément de recouvrement (16) et par une deuxième articulation (30) au boîtier du couplage électrique (10).

6. Couplage électrique (10) selon la revendications,
**caractérisé en ce que**
la première articulation (28) et/ou la deuxième articulation (30) sont conçues comme une articulation à charnière.

7. Couplage électrique (10) selon l'une des revendications 4 à 6,
**caractérisé en ce que**
l'élément de levier (22) présente au moins un guidage à coulisse (24) et l'élément de commande (20) au moins un tourillon de coulisse (26), le tourillon de coulisse (26) pénétrant dans le guidage à coulisse (24) et pouvant être déplacé le long du guidage à coulisse (24).

8. Couplage électrique (10) selon la revendication 7,
**caractérisé en ce que**
le guide de coulisse (24) est disposé entre la première articulation (28) et la deuxième articulation (30).

9. Couplage électrique (10) selon la revendication 7 ou 8,
**caractérisé en ce que**
le guidage à coulisse (24) est réalisé en forme de S, de sorte que le mouvement de l'élément de commande (20) le long de la direction d'introduction de la broche de contact électrique (42) fait pivoter l'élément de levier (22) vers l'extérieur, déplace l'élément de recouvrement (16) vers l'extérieur et ouvre la douille de contact (12).

10. Couplage électrique (10) selon l'une des revendications 4 à 9,
**caractérisé en ce que**
deux éléments de levier (22) et deux éléments de recouvrement (16) sont associés à un élément de commande (20).

11. Couplage électrique (10) selon la revendication 10,
**caractérisé en ce que**
l'élément de commande (20) est disposé entre les éléments de levier (22).

12. Couplage électrique (10) selon l'une des revendications précédentes,
**caractérisé en ce que**
la douille de contact (12) présente une ouverture latérale à travers laquelle l'élément de recouvrement (16) destiné à recouvrir l'élément de contact électrique (18) peut pénétrer ou pénètre dans la douille de contact (12).

13. Couplage électrique (10) selon l'une des revendications précédentes,
**caractérisé en ce que**
l'élément de commande (20) présente au moins un ergot de guidage (44) et le couplage électrique (10) au moins un rail de guidage (46) correspondant à l'ergot de guidage (44), l'ergot de guidage (44) étant disposé latéralement devant un côté frontal du rail de guidage (46) lorsque l'élément de recouvrement (16) est fermé, le nez de guidage (44) pouvant être déplacé le long d'un côté longitudinal du rail de guidage (46) lors du mouvement de l'élément de commande (20) parallèlement à la direction d'introduction de la broche de contact électrique (42) et venant buter contre le côté frontal du rail de guidage (46) en cas d'écart dépassant un jeu prédéfini par rapport au mouvement parallèle prévu et empêchant ainsi un autre mouvement de l'élément de commande (20) et donc un mouvement de l'élément de recouvrement (16) dans l'état ouvert.

14. Système d'embrayage comprenant un couplage électrique (10) selon l'une des revendications 1 à 13 et un autre couplage électrique (40), l'autre couplage électrique (40) étant réalisé au moins par zones de manière complémentaire à le couplage électrique (10), et
dans lequel l'autre couplage électrique (40) comprend au moins un élément d'entraînement qui est prévu pour déplacer l'élément de commande (20) du couplage électrique (10) pendant l'accouplement de l'autre couplage électrique (40) à le couplage électrique (10).
